# FASCICULE DE BREVET EUROPEEN

(11) **EP 1 594 711 B1**
(45) Date de publication et mention de la délivrance du brevet: **06.07.2011**
(21) Numéro de dépôt: 04712077.9
(22) Date de dépôt: 18.02.2004
(51) Int. Cl.: B60J 7/20

(54) **DISPOSITIF DE TOIT ESCAMOTABLE ET VEHICULE EQUIPE D'UN TEL DISPOSITIF**
VORRICHTUNG FÜR EIN VERSENKBARES DACH UND FAHRZEUG MIT EINER SOLCHEN VORRICHTUNG
RETRACTABLE ROOF DEVICE AND VEHICLE FITTED WITH SAID DEVICE

(30) Priorité: 21.02.2003 FR 0302155
(43) Date de publication de la demande: 16.11.2005
(73) Titulaire: Renault s.a.s., 92100 Boulogne Billancourt (FR)
(72) Inventeur: BAUMEIER, Andréas, 49143 Bissendorf (DE)
(86) Numéro de dépôt international: PCT/FR2004/000376
(87) Numéro de publication internationale: WO 2004/076214

(56) Documents cités:
- FR-A- 2 839 282
- FR-A- 2 839 475
- US-A1- 2002 041 109
- US-A1- 2002 149 227

## Description

La présente invention concerne les dispositifs de toit escamotable et les véhicules équipés de tels dispositifs. Elle concerne plus particulièrement les dispositifs de toit escamotable apte à être rangé dans une partie du coffre d'un véhicule.

De telles structures et mécanismes associés sont décrits et représentés dans les documents DE4445580 et DE4445944. Il est décrit dans le premier document un toit rigide escamotable dans une partie du coffre, ce toit étant articulé par un système d'articulation en quadrilatère. Il est décrit dans le deuxième document une porte de coffre dont le mécanisme permet une ouverture vers l'avant pour le rangement des bagages et une ouverture vers l'arrière pour permettre le passage d'un toit rigide. Le document US 2002/0041109 divulgue le préambule de la revendication 1.

Les structures présentées dans ces documents présentent plusieurs inconvénients, et par exemple le nombre de pièces nécessaires qui ajoute un poids et un coût contraignants et qui ne permet pas une répétitivité de montage fiable. Le grand nombre de pièces utilisées dans les différentes tringleries présente également un inconvénient par rapport à la stabilité du système. De plus, ces documents ne tiennent ni compte des problèmes posés par la gestion de la tablette arrière lors des mouvement de la structure de toit, ni des problèmes d'interaction entre la caisse du véhicule et les bras des mécanismes passant à travers cette caisse.

Il est un objet de la présente invention de proposer une amélioration de ces dispositifs de toit escamotables. L'invention concerne également un véhicule équipé d'un tel dispositif.

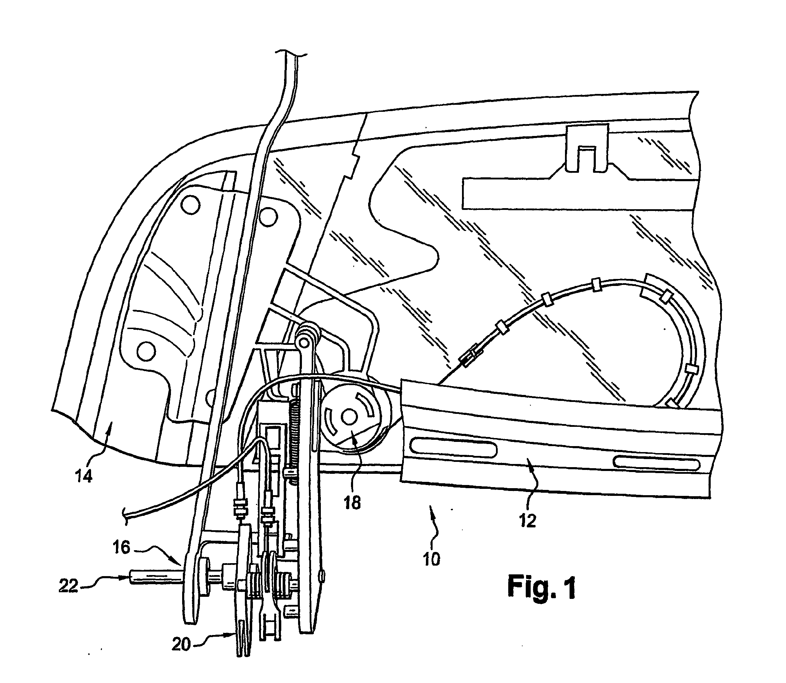

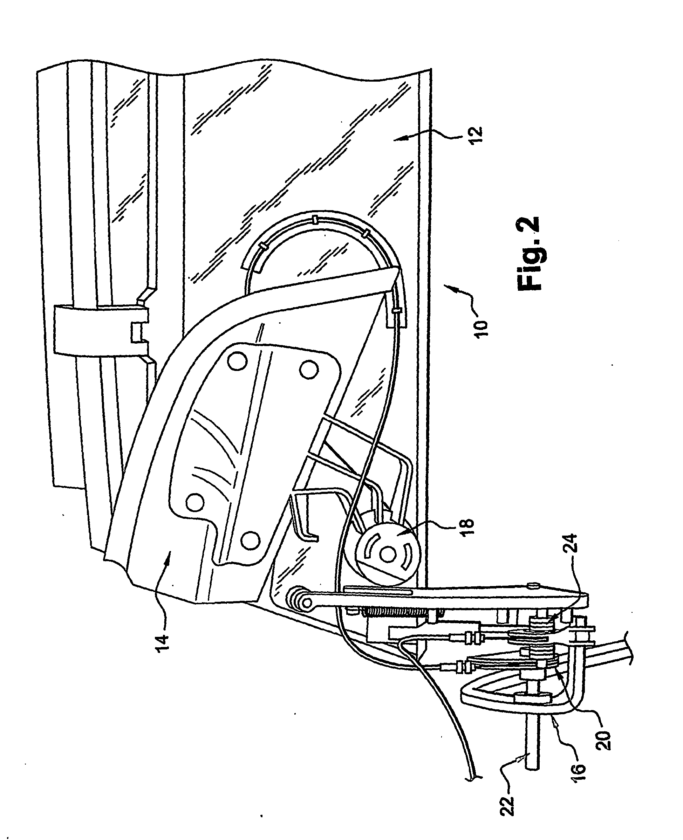

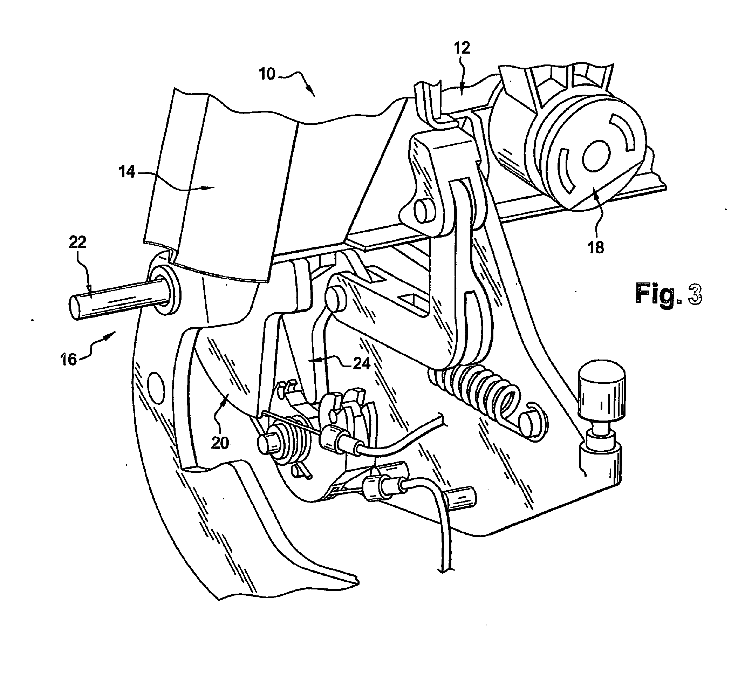

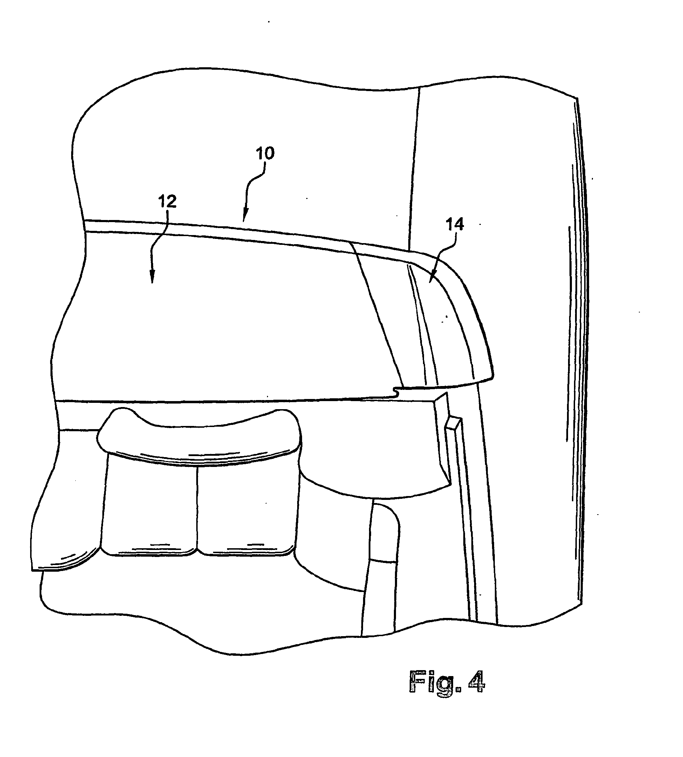

La présente invention va maintenant être décrite, seulement à titre d'exemple et en référence aux figures jointes, parmi lesquelles :
o la figure 1 est une vue de dessous partielle d'une tablette arrière avec un volet de fermeture en position déployée ;
● la figure 2 est une vue de dessous partielle d'une tablette arrière selon la figure 1 avec le volet de fermeture en position rangée ;
● la figure 3 est une vue de détail d'un mécanisme pour déplacer le volet de fermeture dans la position déployée ;
● la figure 4 est une vue de dessus de la tablette et du volet de fermeture dans la position déployée.

En référence à ces figures, un véhicule comprend un dispositif de toit escamotable. Afin de clarifier la description qui va suivre, on va définir les deux positions extrêmes du toit.

Lorsque le panneau de toit se retrouve en appui sur le cadre du véhicule, et en particulier sur le montant supérieur du pare-brise, c'est-à-dire lorsque le toit réalise une fonction de couverture de l'habitacle formé par le poste de conduite et ensemble des sièges des passagers, le toit est dit en position fermée.

Lorsque l'ensemble du toit se retrouve logé dans l'espace de rangement qui lui est consacré à l'arrière du véhicule, de telle sorte que l'habitacle formé par le poste de conduite et l'ensemble des sièges passagers est alors découvert, le toit est dit en position escamotée.

Dans une configuration avec le toit en position fermée, une structure de couverture arrière 10 est située derrière les arceaux de sécurité. Avantageusement, elle comprend une tablette arrière 12 sensiblement horizontale. De part et d'autre de la tablette, transversalement au véhicule, des bras sont déployés pour supporter le toit. En position décapotée, la tablette arrière 12 est située de la même façon derrière les arceaux de sécurité, sensiblement horizontale. De part et d'autre de la tablette, transversalement au véhicule, afin de masquer l'espace laissé libre par les bras solidaires du toit qui sont désormais dans l'espace de rangement consacré au toit à l'arrière du véhicule, des « flaps », dit volets de fermeture 14, sont déplacés d'une position rangée à une position dite déployée permettant de masquer l'espace libre. La présence de tels volets 14 est nécessaire d'un point de vue esthétique afin que le véhicule en position décapotée présente une surface pleine, d'un point de vue aérodynamique pour éviter des perturbations dans l'écoulement de l'air, et également d'un point de vue de l'étanchéité du mécanisme présent sous la tablette.

Afin de permettre l'escamotage du toit dans l'espace de rangement à l'arrière du véhicule, la tablette arrière 12 change de position et passe successivement d'une position initiale, dite positions de repos et de préférence sensiblement horizontale, à une position dite ouverte et de préférence sensiblement verticale afin d'offrir de la place pour le passage du toit, avant de revenir finalement dans une position sensiblement horizontale.

De façon avantageuse lorsque le toit est en position fermée ou en position escamotée, la tablette arrière 12 présente un angle avec le plan horizontal, de telle sorte que la partie arrière de la tablette 12 est plus basse que la partie avant de la tablette 12.

Le mouvement de la tablette arrière 12 lors d'un escamotage du toit peut se dérouler de la façon suivante:

En position fermée, la tablette 12, sensiblement horizontale, est pincée dans sa partie arrière par la partie arrière du toit. Lorsque l'ouverture du toit est commandée par le conducteur, une unité de contrôle pilote un premier mouvement de la porte de coffre pour libérer l'espace de rangement consacré au toit dans la partie arrière du véhicule. Pendant que la porte de coffre continue à pivoter vers l'arrière du véhicule, selon un axe transversal du véhicule, le toit est mis en mouvement par une action hydraulique d'un vérin de commande. Par un système de cames, le mouvement de rotation du toit engendre un mouvement de rotation de la tablette. Afin de permettre la libération de la tablette arrière 12 du pinçage réalisé par le toit, la tablette arrière 12 réalise un premier mouvement de rotation vers le bas du véhicule, selon un axe transversal du véhicule. Lorsque la partie arrière du toit, qui réalisait précédemment le pinçage de la tablette, est située à un niveau vertical inférieur à celui de la tablette, la tablette réalise un deuxième mouvement de rotation, cette fois vers le haut du véhicule, selon le même axe transversal. Ce deuxième mouvement de rotation s'opère jusqu'à ce que la tablette se retrouve en butée en position sensiblement verticale. Pendant que la tablette est dans cette position de butée, le toit continue son escamotage dans l'espace de rangement qui lui est consacré et entraîne désormais la rotation des volets de fermeture 14.

Le rabattement de la tablette est ensuite commandé par le rabattement de la porte de coffre. Un câble mécanique, par exemple du type des câbles de frein de vélo connus sous le nom de câble Bowden, transmet un effort engendré par le mécanisme de fermeture de la porte de coffre à un dispositif relié à la tablette. Lorsque le rabattement de la porte de coffre est ordonné par l'unité de contrôle, c'est-à-dire alors que le toit n'est pas encore intégralement escamoté, un mouvement simultané de la tablette arrière 12 est généré par la liaison par câble, de manière à faire revenir la tablette arrière 12, maintenant greffée des deux volets de fermeture 14, dans une position sensiblement horizontale.

Le mouvement de la tablette arrière 12 pour permettre le passage du toit d'une position escamoté à une position fermée est symétriquement le même. La tablette est dans un premier temps amenée en butée dans une position sensiblement verticale, puis ramenée dans une position sensiblement horizontale. Ces mouvements sont crées par la rotation du toit retrouvant une position fermée et par l'action du câble Bowden transmettant à la tablette les mouvements de la porte de coffre.

Comme vu précédemment, lorsque le toit est en position escamotée, il est nécessaire d'avoir des volets de fermeture 14 de part et d'autre de la tablette arrière 12 pour des besoins esthétiques, aérodynamiques et d'étanchéité. Lorsque le toit est en position fermée, ces mêmes volets de fermeture 14 ne peuvent être dans cette position, car ils gêneraient le passage des bras associés au toit. En position fermée, ces volets 14 sont donc glissés sous la tablette arrière 12. Le principe du mouvement des volets 14 est le suivant:

Les volets 14 restent glissés sous la tablette 12 lorsque le toit est en position fermé, et lorsque ce toit commence à être animé d'un mouvement de rotation. Ils restent glissés dans cette position jusqu'à ce que la tablette 12 soit en butée en position sensiblement verticale. Dans cette position, la rotation du toit selon un axe transversal du véhicule entraîne par cames le déplacement des volets 14. Afin de passer d'une position glissée sous la tablette 12 à une position à coté de la tablette 12 en formant un plan avec cette tablette 12, le mouvement des volets 14 doit être à la fois un mouvement de dégagement de sous la tablette 12 et un mouvement de translation pour arriver à la même hauteur que la tablette 12. Avantageusement, ces deux mouvements sont réalisés simultanément par une rotation hélicoïdale. Il sera compris que ces deux mouvements peuvent être réalisés successivement par un mouvement de rotation puis de translation, ou par deux mouvements de translation.

Les mouvements respectifs des volets de fermeture 14 et de la tablette 12 sont donc engendrés par un mécanisme commun de rotation basé sur le mouvement de rotation initial du toit.

Un mouvement continu de rotation du toit entraîne deux mouvements successifs, le mouvement de la tablette 12 dans un premier temps puis le mouvement des volets de fermeture 14. De façon symétrique selon l'axe médian du véhicule, le mécanisme décrit par la suite pour un côté gauche du véhicule est le même pour le coté droit

Le mouvement continu de rotation du toit est engendré par une commande hydraulique. Un vérin, composé d'un corps et d'un piston, est articulé sur la caisse, à l'extrémité du corps du vérin par laquelle le piston débouche. Une telle articulation autorise un mouvement du corps du vérin sans être trop pénalisant pour la poussée longitudinale du piston. Ce mouvement du piston génère le mouvement de deux bielles reliées respectivement à l'extrémité libre du piston. Une première bielle est solidaire de la caisse, assurant à la fois un guidage du mouvement du piston et une tenue de celui-ci lorsqu'il est en extension, et une deuxième bielle, dite bielle de démultiplication, montée en rotation libre sur le bras intérieur du toit, le bras supportant le toit situé vers l'habitacle, permet de transférer le mouvement de translation du piston en un mouvement rotatif de ce bras intérieur. La bielle de démultiplication tire le bras intérieur vers le vérin lorsque le piston se rétracte et inversement pousse le bras intérieur lorsque le piston s'expanse hors du corps du vérin. La partie inférieure du bras intérieur étant montée à rotation autour d'un axe fixe, dit axe de rotation principal 22, le déplacement du bras intérieur est donc un mouvement de rotation autour de cet axe 22. L'ensemble des différents points de pivot formé entre autres par cet axe de rotation 22, les points de pivot entre la structure du toit et les parties supérieures des bras intérieur et extérieur, et un point de pivot entre la partie inférieure du bras extérieur et la caisse, forme un quadrilatère articulé dont le mouvement est généré par la rotation du bras intérieur autour de l'axe de rotation principal 22. La mobilité du toit, supporté par le quadrilatère articulé, est donc engendré par le mouvement sensiblement longitudinal du piston et s'effectue via une rotation de l'axe principal 22.

Cet axe de rotation principal 22 porte également au moins une première poulie 20 présentant une saillie perpendiculaire à l'axe de rotation et une gorge sur le pourtour de la première poulie 20. L'axe de rotation principal 22 porte également au moins une came 24 présentant une protubérance radiale. Le bras intérieur s'étend à son extrémité vers l'intérieur du véhicule, cette extension étant parallèle à l'axe de rotation principal 22. La position relative des différents éléments portés par l'axe de rotation principal 22 est telle que le bras intérieur est situé vers l'extérieur du véhicule, la came 24 est située vers l'intérieur du véhicule et la première poulie 20 est située entre le bras et la came 24. L'extension du bras intérieur parallèle à l'axe de rotation principal 22 coupe donc le plan de rotation de la première poulie 20 et la saillie radiale de la première poulie 20 présente une dimension telle qu'elle peut être en contact avec l'extension du bras intérieur parallèle à l'axe de rotation principal 22.

Un levier sensiblement « en L » est articulé à une de ses extrémités sur la came 24 et présente un orifice permettant le passage de la protubérance radiale de la came 24 dans une position extrême. L'autre extrémité du levier est montée à rotation autour d'un axe solidaire de la tablette 12.

Une seconde poulie est montée à rotation autour d'un second axe de rotation porté par un carter, qui porte également l'axe de rotation principal 22. Cette seconde poulie présente une gorge dans laquelle un câble mécanique, du type câble de frein de vélo, est inséré. Ce câble est relié au mécanisme d'ouverture de la porte de coffre.

La came 24 est reliée à une extrémité d'un ressort de rappel dont l'autre extrémité est solidarisée au carter. Ce ressort de rappel tend à ramener la tablette 12, via la came 24 et le « levier en L », dans une position sensiblement horizontale, lorsque la deuxième poulie, qui bloque la protubérance radiale de la came 24, est actionné par le câble de la porte de coffre. La came 24 est alors libérée et revient au contact de l'extension du bras intérieur par la fonction de rappel du ressort.

L'extension du bras intérieur présente une première et une deuxième surface apte à coopérer simultanément avec une troisième surface de la saillie de la première poulie 20 et avec une quatrième surface de la came 24. Ces troisièmes et quatrièmes surfaces sont agencées de manière à, dans une position de repos lorsque la tablette 12 est baissée et le toit fermé, ne pas se trouver dans un plan parallèle au plan défini par les première et deuxième surfaces de l'extension du bras intérieur. La came 24 est ainsi décalée en position de repos par rapport à la première poulie 20 de sorte que lors de l'escamotage du toit, et donc de la rotation du bras intérieur, la seconde surface de l'extension du bras intérieur vienne tout d'abord en contact avec la quatrième surface de la came 24 et engendre tout d'abord la rotation de la came 24 autour de l'axe de rotation principal 22. La rotation de cette came 24 entraîne d'une part le déplacement du « levier en L » et donc de la tablette 12 dans une position verticale, et d'autre part le déplacement de la protubérance radiale de la came 24 qui s'engage alors dans une rainure de la deuxième poulie.

Pendant que l'escamotage du toit se poursuit, c'est à dire que la rotation du bras intérieur autour de l'axe de rotation principal 22 continue, la première surface de l'extension du bras intérieur vient maintenant en contact de la troisième surface de la première poulie 20 et engendre une rotation de la première poulie 20 autour de l'axe de rotation principal 22. Un câble de type frein de vélo est fixé dans la gorge de cette première poulie 20 et la rotation de cette première poulie 20 génère un effort de traction sur ce câble, effort de traction qui se répercute à l'autre extrémité du câble sur un mécanisme de pilotage 18 des volets de fermeture 14. Ce mécanisme de pilotage 18 des volets de fermeture 14 est fixé sur la tablette 12 et consiste en un axe solidaire de la tablette 12 et un cylindre portant le volet de fermeture 14. Le mouvement du cylindre par rapport à l'axe est un mouvement de rotation hélicoïdale qui permet le dégagement du volet 14 de sous la tablette 12 et permet en même temps de rétablir le volet 14 à un niveau vertical sensiblement équivalent Le mouvement de rotation hélicoïdale des volets de fermeture 14 est donc est initié par la rotation de la première poulie 20 portée par l'axe de rotation principal 22.

Il sera compris que le mouvement des volets de fermeture 14 débute pendant l'escamotage du toit, alors que la tablette 12 est sensiblement en position verticale. Ce mouvement des volets 14 se termine alors que le toit est déjà escamoté et que la porte de coffre reprend sa position, initiale. L'ensemble formé par la première poulie 20, le support intermédiaire et la came 24 étant en butée contre l'extension du bras intérieur, le retour en position de la tablette arrière 12 est initié par la mise en mouvement de la porte de coffre. Un câble relie le mécanisme de cette porte de coffre à la seconde poulie et permet le dégagement de la protubérance radiale de la came, en créant un mouvement rotatif de la seconde poulie. Le mouvement désormais autorisé de la came 24 et donc du « levier en L » permet un retour de la tablette 12 dans une position sensiblement horizontale. Cette position sensiblement horizontale est atteinte en butée par le contact de la tablette 12 sur un pion solidaire du carter.

Lorsque le conducteur commande une fermeture du toit, l'opération se déroule symétriquement de la même façon. L'ouverture de la porte de coffre et la mise en mouvement de l'ensemble articulé supportant le toit engendrent la mise en position de la tablette arrière 12 dans une position sensiblement verticale et engendre le dégagement des butées réalisées par les premières et deuxièmes surfaces de l'extension du bras intérieur sur les troisième surface de la première poulie 20 et quatrième surface de la came. Un système de ressort placé entre l'axe et le cylindre utilisés pour la rotation hélicoïdale des volets de fermeture 14 permet alors, lorsque la pression exercée par le câble sur le cylindre n'existe plus, c'est à dire lorsque la première poulie 20 s'est dégagée suite à la rotation de l'axe principal 22, de faire revenir les volets 14 en position sous la tablette 12 pour permettre le passage des bras supportant la structure de toit

La position fermée du toit, dans laquelle l'ensemble articulé supportant le toit présente une partie inférieure sous la structure de caisse et une partie supérieure liée au toit et donc au dessus de cette structure de caisse, et la position escamotée de ce toit, dans laquelle l'ensemble articulé est entièrement situé sous la structure de caisse, implique la création d'un orifice dans la structure de caisse pour permettre le passage de l'ensemble articulé. Ces orifices ne peuvent être découverts lorsque le toit est en position escamotée pour des raisons d'esthétique, d'aérodynamique ou d'étanchéité. Avantageusement, le bras intérieur supportant le toit présente une forme coudée près de son extrémité inférieure. Cette forme coudée est complémentaire d'une came, propre à une trappe, non représenté et située dans la structure du véhicule, dans une zone sensiblement proche de la tablette 12. Lorsque le toit est animé afin de retrouver une position fermée, la partie inférieure du bras intérieur rentre en contact avec la came 24 de la trappe et engendre une rotation de cette came 24 et d'une plaque associée et donc une ouverture de la trappe. Le bras intérieur et le bras extérieur peuvent alors passer à travers cette trappe pour supporter le toit. Un ressort de rappel est lié à la came 24 de la trappe de sorte que, lors de l'escamotage du toit, et donc lorsque la partie inférieure du bras intérieur ne se trouve plus en contact avec la came, cette came 24 reprenne sa position de repos et génère l'obturation de la trappe par un retour de la plaque associée à la came 24 dans sa position de repos.

La présente invention concerne également un mécanisme de la porte de coffre. Un véhicule dont le toit rigide peut être escamoté dans un espace de rangement consacré à l'arrière du véhicule doit présenter une porte de coffre à la cinématique particulière.

Dans un premier temps, la porte de coffre doit permettre une ouverture standard, afin de ranger des bagages dans le coffre. Pour cela, la porte de coffre est montée à rotation autour d'un axe transversal dans la partie de la porte de coffre située le plus en avant du véhicule, lorsque cette porte de coffre est en position fermée : l'accès au coffre se fait alors, lorsque la porte de coffre est ouverte, par l'arrière du véhicule.

Dans un deuxième temps, lorsque le conducteur demande un escamotage du toit, le toit vient se ranger dans un espace de rangement qui lui est consacré dans la zone du coffre. La porte de coffre doit donc s'ouvrir pour laisser le passage au toit et une ouverture standard ne le permet pas. La porte de coffre doit alors pivoter autour d'un second axe de rotation transversal, dans la partie de la porte de coffre située le plus en arrière du véhicule, lorsque cette porte de coffre est en position fermée : l'accès au coffre se fait alors, lorsque la porte de coffre est ouverte, par l'avant du véhicule et permet donc le passage du toit et de son mécanisme associé.

La porte de coffre est mis en mouvement par un ensemble de trois éléments principaux, à savoir un dispositif de serrure comprenant une charnière dite en « col de cygne » et deux mécanismes latéraux symétriquement disposés de chaque coté de la porte de coffre. Seul le mécanisme latéral du côté gauche du véhicule sera décrit, le mécanisme latéral correspondant du côté droit se retrouvant par symétrie.

Ce mécanisme latéral est composé d'une platine solidarisée à la caisse, d'un châssis intermédiaire articulé sur cette platine, d'un premier système pneumatique dont une extrémité est fixée sur la platine et dont l'autre extrémité est reliée au châssis intermédiaire, et d'un système d'articulation situé entre le châssis intermédiaire et la porte de coffre et formé de bielles et d'un second système pneumatique. La platine permet de regrouper, sur la même pièce, différentes fonctionnalités comme une articulation du châssis intermédiaire, des moyens d'immobilisation offrant la possibilité de verrouiller ce châssis en position prêt à monter, la fixation du premier système pneumatique pilotant le mouvement du châssis intermédiaire. Cette platine est constituée d'un matériau peu lourd, est de faible épaisseur et peut présenter avantageusement une forme triangulaire.

Le châssis intermédiaire est lui constitué d'une seule pièce, sensiblement en forme de « double L ». Une première partie, dite partie d'articulation, est montée sur la platine par une liaison pivot selon un axe sensiblement transversal au véhicule et perpendiculaire au plan de la platine. Cette première partie d'articulation porte également l'extrémité libre du premier système pneumatique, le mouvement de translation du piston générant, de par cette liaison en rotation libre et le point d'articulation du châssis sur la platine, un mouvement de rotation du châssis intermédiaire autour d'un axe transversal au véhicule et perpendiculaire au plan de la platine. Le châssis intermédiaire présente une première portion coudée qui relie la première partie d'articulation à une deuxième partie, dite de transfert. Cette deuxième partie de transfert et la première partie d'articulation présente un angle sensiblement droit. A l'autre extrémité de la deuxième partie de transfert, une deuxième portion coudée est prolongée par une troisième partie, dite de support, sensiblement parallèle à la première partie d'articulation. Cette troisième partie de support présente différents points d'articulation sur lesquels sont fixés les différentes bielles du système d'articulation, système situé entre la troisième partie de support du châssis intermédiaire et une plaque de support solidaire de la porte de coffre. L'extrémité libre du piston du second système pneumatique est également fixée sur la troisième partie de support du châssis, le corps du vérin du second système pneumatique étant relié à la plaque de support solidaire de la porte de coffre.

Lors d'une ouverture classique de la porte de coffre pour un rangement de bagages, le piston du second système pneumatique, compressé lorsque la porte de coffre est fermée, se détend dès que la serrure de la porte de coffre est déverrouillée. L'envergure de ce piston engendre alors une ouverture de la porte de coffre, accompagné par les bielles du système d'articulation relié à la troisième partie de support du châssis intermédiaire. Dans une telle ouverture, le châssis intermédiaire ne bouge pas et reste fixe par rapport à la platine par l'action des moyens d'immobilisation montés sur cette platine. Un pion monté sur le châssis, par exemple au niveau de la deuxième partie courbée, peut présenter à cet effet une forme complémentaire d'un système de crochets des moyens d'immobilisation. Dans cette position, dite de repos, l'agencement de l'ensemble formé par la platine et le châssis est tel qu'avantageusement la première partie d'articulation et la troisième partie de support du châssis intermédiaire sont sensiblement orientées horizontalement et la deuxième partie de transfert est sensiblement orientée verticalement. Afin d'assurer le crochetage du châssis dans la serrure pour revenir à une position de repos, une poulie peut être fixée sur le châssis intermédiaire et servir de guidage par sa complémentarité avec une gorge réalisée sur la platine. Avantageusement, cet ensemble poulie/gorge est réalisé à des extrémités de la platine et du châssis éloignée de leur point d'articulation commun.

Un crochetage sûr du châssis par rapport à la platine est nécessaire pour que l'ouverture de la porte de coffre pour le rangement des bagages se fasse via une articulation reposant sur une structure sensiblement horizontale et rigide. Il est également intéressant pour le constructeur lors du montage du véhicule, car l'ensemble formé par la platine et le châssis crocheté dans la serrure peut être ainsi fourni prêt à monter sans présenter de dispersion entre chaque montage sur véhicule. La répétitivité que présente un tel système offre alors un gain de temps et une qualité de montage intéressante pour les constructeurs.

Lors de l'ouverture du coffre par rotation de la porte de coffre autour du second axe de rotation transversal dans la partie de la porte de coffre située le plus en arrière du véhicule, c'est-à-dire lors de l'ouverture de la porte de coffre pour permettre l'escamotage du toit, le châssis intermédiaire est décrocheté de la serrure de la platine. Le premier système pneumatique est fixé sur la platine, avantageusement dans la partie inférieure de cette platine, l'extrémité libre du piston étant, comme décrit plus haut, reliée au châssis intermédiaire. Le piston du premier système pneumatique, compressé lorsque le châssis intermédiaire est dans une position de repos, se détend dès que la serrure de la platine ne retient plus le pion du châssis intermédiaire. L'envergure de ce piston, puis son pilotage par pression hydraulique, engendre alors une rotation du châssis intermédiaire selon un axe de rotation perpendiculaire à la platine et donc sensiblement parallèle au second axe de rotation transversal. Dans cette configuration, le pilotage du second système pneumatique, situé entre la troisième partie de support du châssis et la plaque de support solidaire de la porte de coffre, est tel que le second système pneumatique reste compressé. Les bielles du système d'articulation situé entre la troisième partie de support du châssis intermédiaire et la plaque de support solidaire de la porte de coffre restent dans ce cas au repos et ne s'articulent pas. Le système transmet le mouvement de rotation du châssis intermédiaire à la porte de coffre, qui connaît un mouvement de rotation autour d'un axe transversal propre à la porte de coffre et différent du châssis intermédiaire.

Ce mouvement de rotation est réalisé autour d'un axe transversal qui passe avantageusement par la serrure de la porte de coffre. Cette serrure présente donc une structure particulière afin de prendre en compte l'ouverture du coffre selon ce second axe de rotation transversal passant par la serrure et ne pas générer d'effort dans la serrure, ce qui serait le cas avec une serrure classique et une porte de coffre qui bouge tout en restant accrochée. Cette serrure repose sur une structure formée avantageusement de deux parties, un bâti fixe solidaire de la structure de caisse du véhicule et une charnière dite « en col de cygne » qui se déplace dans une glissière du bâti. La forme courbée de la glissière et la forme de la charnière correspondante génère un mouvement de cette charnière équivalent à un mouvement de rotation autour d'un axe transversal assimilable au second axe de rotation transversal autour duquel la porte de coffre est en rotation. La partie supérieure de la charnière en « col de cygne » porte la gâche et le pêne de la serrure qui va correspondre à une zone aménagée dans la partie inférieure de la porte de coffre. Grâce à la liaison courbe entre le bâti et la charnière, les deux éléments de la serrure portés à la fois par la caisse et la porte de coffre peuvent s'incliner de façon coordonnée. Le mouvement de la charnière « en col de cygne » correspond au mouvement de la porte de coffre dans des proportions inférieures. Cette combinaison des mouvements autorise un mouvement de rotation de la porte de coffre sans générer d'effort sur la serrure au contact de cette porte de coffre.

L'ouverture de la porte de coffre pour l'escamotage du toit repose donc, entre autres, sur deux systèmes latéraux et un système de serrure, comportant une charnière « col de cygne », indépendants. Dans chacun des systèmes latéraux, le châssis intermédiaire est formé d'une seule pièce, ce qui octroie un gain de pièce, et donc de poids et d'argent, et une meilleure stabilité de chaque système latéral. La synchronisation des mouvements des deux systèmes latéraux est réalisée par l'envoi de commande équivalente en pression dans les premiers systèmes pneumatiques. Une telle synchronisation permet ainsi de s'affranchir d'un appendice mécanique reliant les deux systèmes latéraux. Il est à noter que, de façon avantageuse, la porte de coffre peut présenter une flexibilité prédéterminée pour s'adapter aux mouvements des systèmes latéraux indépendants.

Le montage des mécanismes du toit et de la porte de coffre sur le véhicule peut être réalisé de la façon suivante. Le soubassement d'un véhicule, à savoir la totalité des structures de caisse du véhicule, hors ouvrants et toit, arrive sur une chaîne de montage. Un premier ensemble formé entre autres par la platine et le châssis intermédiaire, clipsé sur la platine, est monté sur les flancs latéraux à l'intérieur de la zone de coffre. Cet ensemble comporte également le second système pneumatique et le système d'articulation formé de bielles, ainsi que la plaque de support destinée à être solidarisée à la porte de coffre. L'ensemble est livré à la chaîne de montage avec la platine et le châssis clipsés, avec le système d'articulation replié et le second système pneumatique relié au niveau de son corps de vérin à la plaque de support et clipsé au niveau de l'extrémité de son piston également sur la plaque de support. Cette extrémité du piston est destinée, à la fin du montage, à être fixée sur la troisième partie de support du châssis intermédiaire. Elle est dans un premier temps clipsée sur la plaque de support pour faciliter la manipulation par l' opérateur, et est ensuite déclipsée et mise en position sur le châssis dès que les ouvrants latéraux sont installés. Il est à noter que le fait que l'ensemble platine/châssis arrive sur la chaîne de montage clipsé permet de fixer l'ensemble sans dispersion entre chaque montage. La plaque de support est ensuite solidarisée à la porte de coffre lorsque celle-ci arrive sur la chaîne de montage. Le mécanisme de la porte de coffre est alors quasiment installé. Seul manque le premier système pneumatique, qui doit être monté entre la première partie d'articulation du châssis et la platine. Ce premier système pneumatique est livré sur la chaîne de montage avec le toit. Le toit est en effet livré sur la chaîne de montage avec au moins le boîtier de distribution hydraulique, les premier système pneumatique gauche et droit, la tablette 12, les volets de fermeture 14 et le mécanisme associé à cette tablette 12 et ces volets 14. Le fait qu'un ensemble hydraulique soit ainsi livré d'un bloc permet à l'opérateur de réaliser un montage facilité des câbles hydrauliques. Une fois le toit en place, l'opérateur n'a plus qu'à fixer le boîtier de distribution hydraulique dans le coffre et à le connecter à une unité de contrôle pour que les commandes de pression hydraulique nécessaires à la mise en mouvement des mécanismes du toit et du coffre puissent être transmis depuis l'unité de contrôle vers les systèmes pneumatiques. L'opérateur doit également fixer le premier système pneumatique entre le châssis et la platine, en fixant le corps du vérin sur la platine, avantageusement dans la partie inférieur de cette platine, et en montant à rotation l'extrémité libre du piston sur la première partie d'articulation du châssis. L'opérateur doit également connecter, par un câble de type frein de vélo, le mécanisme de porte de coffre et le mécanisme de la tablette 12 livré avec le toit Un pilotage synchronisé des ouvertures du toit et de la porte de coffre est assuré entre autres par cette connexion.

### Table des références en accord avec les figures 1 à 4

- 10: Structure de couverture arrière
- 12: Tablette arrière
- 14: Volets de fermeture
- 16: Dispositif de guidage
- 18: Mécanisme de pilotage des volets de fermeture
- 20: Première poulie
- 22: Axe principal de rotation
- 24: Came

## Revendications

1. Dispositif de toit escamotable pour un véhicule, comprenant un panneau de toit pouvant être déplacé par des moyens de guidage (16) d'une position fermée dans la zone des passagers du véhicule à une position escamotée dans une zone arrière dudit véhicule, ce dispositif comprenant également une structure de couverture arrière (10) incluant des volets de fermeture (14), lesdits volets de fermeture (14) étant aptes à être pilotés automatiquement entre une position déployée et une position rangée **par un effort de traction sur un câble** de type frein de vélo, **caractérisé en ce qu'**il comprend une première poulie (20) portée par un axe fixe de rotation principal (22) autour duquel est montée à rotation une partie inférieure d'un bras intérieur du toit, la première poulie (20) présentant une saillie perpendiculaire audit axe de rotation principal (22) **et, sur son pourtour,** une gorge **dans laquelle ledit câble est fixé,** la rotation de la première poulie (20) **générant, d'une part, l'effort de traction qui se répercute, à l'autre extrémité du câble, sur un mécanisme de pilotage (18) des volets de fermeture (14) et** initiant, **d'autre part,** un mouvement de rotation hélicoïdale **desdits** volets.

2. Dispositif selon l'une des revendications précédentes, comprenant également une tablette arrière (12) et **caractérisé en ce que** dans ladite position rangée, les volets de fermeture (14) et la tablette arrière (12) se superposent au moins partiellement, les volets de fermeture (14) étant par exemple glissés au dessus de la tablette ou, de préférence, en dessous de la tablette, ladite tablette (12) étant de préférence aptes à être mise en rotation à l'unisson des volets de fermeture (14).

3. Dispositif selon la revendication 2, **caractérisé en ce qu'**un levier sensiblement « en L » est articulé à une de ses extrémités sur une came (24) et présente un orifice permettant le passage dans une position extrême d'une protubérance radiale de ladite came (24) qui est portée par l'axe de rotation principal (22), l'autre extrémité du levier étant montée à rotation autour d'un axe solidaire de la arrière (12).

4. Dispositif selon la revendication 3, **caractérisé en ce que** la came (24) est située vers l'intérieur du véhicule et la première poulie (20) est située entre ledit bras intérieur du toit, qui est situé vers l'exterieur du véhicule, et la came (24).

5. Dispositif selon l'une des revendications précédentes, **caractérisé en ce qu'**une seconde poulie est montée à rotation autour d'un second axe de rotation porté par un carter, qui porte également l'axe de rotation principal (22), cette seconde poulie présentant une gorge dans laquelle un câble mécanique, du type câble de frein de vélo, est inséré, ce câble étant relié au mécanisme d'ouverture d'une porte de coffre du véhicule.

6. Dispositif selon les revendications 3 et 5 ou 4 et 5, **caractérisé en ce que** la came (24) est reliée à une extrémité d'un ressort de rappel dont l'autre extrémité est solidarisée au carter, ce ressort de rappel tendant à ramener la tablette arrière (12), via la came (24) et le « levier en L », dans une position sensiblement horizontale, lorsque la deuxième poulie, qui bloque la protubérance radiale de la came (24), est actionné par le câble de la porte de coffre, la came (24) étant alors libérée et revenant au contact de l'extension du bras intérieur du toit, par la fonction de rappel du ressort.

7. Dispositif selon l'une des revendications précédentes, **caractérisé en ce que** le bras intérieur du toit s'étend à son extrémité vers l'intérieur du véhicule, cette extension étant parallèle à l'axe de rotation principal (22) et qui coupe le plan de rotation de la première poulie (20) et ladite saillie de cette première poulie, qui est radiale, présente une dimension telle qu'elle peut être en contact avec ladite extension du bras intérieur.

8. Dispositif selon les revendications 3 et 7, **caractérisé en ce que** l'extension du bras intérieur présente une première et une deuxième surface apte à coopérer simultanément avec une troisième surface de la saillie de la première poulie (20) et avec une quatrième surface de la came (24), ces troisièmes et quatrièmes surfaces étant agencées de manière, dans une position de repos lorsque la tablette arrière (12) est baissée et le toit fermé, à ne pas se trouver dans un plan parallèle au plan défini par les première et deuxième surfaces de l'extension du bras intérieur, la came (24) étant ainsi décalée en position de repos par rapport à la première poulie (20) de sorte que lors de l'escamotage du toit, et donc de la rotation du bras intérieur, la seconde surface de l'extension du bras intérieur vienne tout d'abord en contact avec la quatrième surface de la came (24) et engendre tout d'abord la rotation de la came (24) autour de l'axe de rotation principal (22).

9. Un véhicule comprenant un dispositif de toit suivant l'une des revendications précédentes, l'énergie motrice utilisée pour piloter les volets de fermeture (14) étant fournie par un mécanisme de pilotage (18) partagé avec lesdits moyens de guidage (16).

## Claims

1. Retractable roof device for a vehicle, comprising a roof panel which is able to be displaced by guide means (16) from a closed position in the passenger area of the vehicle to a retracted position in a rear area of said vehicle, said device also comprising a rear cover structure (10) including closure flaps (14), said closure flaps (14) being capable of being actuated automatically between a deployed position and a stored position by a tractive force applied to a cable of the bicycle brake type, **characterized in that** it comprises a first pulley (20) carried by a principal fixed pivot pin (22) about which a lower part of an inner arm of the roof is rotatably mounted, the first pulley (20) having a projection perpendicular to said principal pivot pin (22) and, on its periphery, a groove in which said cable is fixed, the rotation of the first pulley (20) generating, on the one hand, the tractive force which acts, at the other end of the cable, on an actuating mechanism (18) for the closure flaps (14) and causing, on the other hand, a helicoidal rotational movement of said flaps.

2. Device according to Claim 1, also comprising a rear shelf (12) and **characterized in that** the closure flaps (14) and the rear shelf (12) are at least partially superposed in said stored position, the closure flaps (14) being, for example, slid above the shelf or preferably below the shelf, said shelf (12) being preferably capable of being set in rotation at the same time as the closure flaps (14).

3. Device according to Claim 2, **characterized in that** a substantially "L-shaped" lever is articulated at one of its ends to a cam (24) and has an orifice permitting the passage into an extreme position of a radial protuberance of said cam (24), which is carried by the principal pivot pin (22), the other end of the lever being rotatably mounted about a pin fixed to the rear shelf (12).

4. Device according to Claim 3, **characterized in that** the cam (24) is located towards the inside of the vehicle and the first pulley (20) is located between said inner arm of the roof, which is located towards the outside of the vehicle, and the cam (24).

5. Device according to one of the preceding claims, **characterized in that** a second pulley is rotatably mounted about a second pivot pin carried by a housing, which also carries the principal pivot pin (22), said second pulley having a groove in which a mechanical cable, of the bicycle brake cable type, is inserted, said cable being connected to the opening mechanism of a luggage compartment door of the vehicle.

6. Device according to Claims 3 and 5 or 4 and 5, **characterized in that** the cam (24) is connected to one end of a restoring spring, the other end thereof being fixed to the housing, said restoring spring tending to return the rear shelf (12) via the cam (24) and the "L-shaped lever" into a substantially horizontal position when the second pulley which blocks the radial protuberance of the cam (24) is actuated by the cable of the luggage compartment door, the cam (24) then being released and returning into contact with the extension of the inner arm of the roof, by the return action of the spring.

7. Device according to one of the preceding claims, **characterized in that** the inner arm of the roof extends at its end towards the inside of the vehicle, said extension being parallel to the principal pivot pin (22) and intersecting the plane of rotation of the first pulley (20) and the dimension of said projection of said first pulley, which is radial, is such that it may be in contact with said extension of the inner arm.

8. Device according to Claims 3 and 7, **characterized in that** the extension of the inner arm has a first and a second surface capable of cooperating simultaneously with a third surface of the projection of the first pulley (20) and with a fourth surface of the cam (24), said third and fourth surfaces being arranged so that, in a resting position when the rear shelf (12) is lowered and the roof is closed, said surfaces are not located in a plane which is parallel with the plane defined by the first and second surfaces of the extension of the inner arm, the cam (24) thus being offset in the resting position relative to the first pulley (20) such that when the roof is retracted, and thus when the inner arm is rotated, the second surface of the extension of the inner arm initially comes into contact with the fourth surface of the cam (24) and initially produces the rotation of the cam (24) about the principal pivot pin (22).

9. Vehicle comprising a roof device according to one of the preceding claims, the driving power used to actuate the closure flaps (14) being provided by an actuating mechanism (18) shared with said guide means (16).

## Patentansprüche

1. Vorrichtung für ein versenkbares Dach für ein Fahrzeug mit einer Dachhaut, die durch Führungsmittel (16) aus einer geschlossenen Position im Insassenbereich des Fahrzeugs zu einer versenkten Position in einem hinteren Bereich des Fahrzeugs verschoben werden kann, wobei diese Vorrichtung auch eine hintere Abdeckstruktur (10) mit Schließklappen (14) umfasst, die geeignet sind, durch Ausübung einer Zugkraft an einem Kabel nach der Art eines Bowdenzugs automatisch zwischen einer ausgefahrenen Position und einer verstauten Position gesteuert zu werden, **dadurch gekennzeichnet, dass** sie eine erste Riemenscheibe (20) umfasst, die von einer feststehenden Hauptdrehachse (22) getragen wird, um die ein unterer Teil eines inneren Arms des Dachs drehmäßig montiert ist, wobei die erste Riemenscheibe (20) einen senkrechten Vorsprung zur Hauptdrehachse (22) hin und an ihrem Umfang eine Kehle aufweist, in der das Kabel befestigt ist, wobei die Drehung der ersten Riemenscheibe (20) einerseits die Zugkraft erzeugt, die am anderen Ende des Kabels an einen Mechanismus (18) zur Steuerung der Schließklappen (14) weitergegeben wird, und andererseits eine schraubenförmige Drehbewegung der Klappen einleitet.

2. Vorrichtung nach Anspruch 1, ferner mit einer hinteren Ablageplatte (12), **dadurch gekennzeichnet, dass** die Schließklappen (14) und die hintere Ablageplatte (12) in der verstauten Position mindestens teilweise übereinanderliegen, wobei die Schließklappen (14) beispielsweise über oder vorzugsweise unter die Ablageplatte (12) geschoben sind, die vorzugsweise geeignet ist, gemeinsam mit den Schließklappen (14) in Drehung versetzt zu werden.

3. Vorrichtung nach Anspruch 2, **dadurch gekennzeichnet, dass** ein im Wesentlichen L-förmiger Hebel an einem seiner Enden an einem Nocken (24) angelenkt ist und eine Öffnung aufweist, durch die ein radialer Höcker des Nockens (24), der von der Hauptdrehachse (22) getragen wird, in eine Endposition gelangen kann, wobei das andere Ende des Hebels zur Drehung um einen fest mit der hinteren Ablageplatte (12) verbundenen Bolzen montiert ist.

4. Vorrichtung nach Anspruch 3, **dadurch gekennzeichnet, dass** der Nocken (24) zum Fahrzeuginneren hin angeordnet ist und die erste Riemenscheibe (20) zwischen dem inneren Arm des Dachs, der zum Fahrzeugäußeren hin angeordnet ist, und dem Nocken (24) angeordnet ist.

5. Vorrichtung nach einem der vorhergehenden Ansprüche, **dadurch gekennzeichnet, dass** eine zweite Riemenscheibe zur Drehung um eine zweite Drehachse montiert ist, die von einem Gehäuse getragen wird, das auch die Hauptdrehachse (22) trägt, wobei diese zweite Riemenscheibe eine Kehle aufweist, in der ein mechanisches Kabel nach der Art eines Bowdenzugs eingeführt ist, das mit dem Öffnungsmechanismus eines Kofferraumdeckels des Fahrzeugs verbunden ist.

6. Vorrichtung nach den Ansprüchen 3 und 5 oder 4 und 5, **dadurch gekennzeichnet, dass** der Nocken (24) mit einem Ende einer Rückholfeder verbunden ist, deren anderes Ende fest mit dem Gehäuse verbunden ist, wobei die Rückholfeder danach strebt, die hintere Ablageplatte (12) über den Nocken (24) und den L-förmigen Hebel in eine im Wesentlichen horizontale Position zurückzuholen, wenn die zweite Riemenscheibe, die den radialen Höcker des Nockens (24) blockiert, durch das Kabel des Kofferraumdeckels betätigt wird, wobei der Nocken (24) somit freigegeben ist und durch die Rückholfederfunktion wieder mit der Verlängerung des inneren Arms des Dachs in Kontakt kommt.

7. Vorrichtung nach einem der vorhergehenden Ansprüche, **dadurch gekennzeichnet, dass** sich der innere Arm des Dachs an seinem Ende zum Fahrzeuginneren erstreckt, wobei diese Verlängerung parallel zur Hauptdrehachse (22) verläuft und die Drehebene der ersten Riemenscheibe (20) schneidet, und der Vorsprung dieser ersten Riemenscheibe, der radial ist, eine solche Abmessung aufweist, dass er mit der Verlängerung des inneren Arms in Kontakt stehen kann.

8. Vorrichtung nach Ansprüchen 3 und 7, **dadurch gekennzeichnet, dass** die Verlängerung des inneren Arms eine erste und eine zweite Fläche aufweist, die geeignet sind, gleichzeitig mit einer dritten Fläche des Vorsprungs der ersten Riemenscheibe (20) und mit einer vierten Fläche des Nockens (24) zusammenzuwirken, wobei diese dritte und diese vierte Fläche so angeordnet sind, dass sie sich in einer Ruheposition, wenn die hintere Ablageplatte (12) abgesenkt und das Dach geschlossen ist, nicht in einer Ebene befinden, die parallel zu der Ebene verläuft, die von der ersten und der zweiten Fläche der Verlängerung des inneren Arms definiert wird, wobei der Nocken (24) somit in Ruheposition bezüglich der ersten Riemenscheibe (20) versetzt ist, so dass die zweite Fläche der Verlängerung des inneren Arms beim Versenken des Dachs und somit bei der Drehung des inneren Arms, zunächst mit der vierten Fläche des Nockens (24) in Kontakt kommt und zunächst die Drehung des Nockens (24) um die Hauptdrehachse (22) hervorruft.

9. Fahrzeug mit einer Dachvorrichtung nach einem der vorhergehenden Ansprüche, wobei die zur Steuerung der Schließklappen (14) verwendete Antriebsenergie von einem den Führungsmitteln (16) gemeinsamen Steuermechanismus (18) geliefert wird.
